# EUROPÄISCHE PATENTSCHRIFT

(11) **EP 0 507 057 B1**
(45) Veröffentlichungstag und Bekanntmachung des Hinweises auf die Patenterteilung: **22.02.1995**
(21) Anmeldenummer: 92101878.4
(22) Anmeldetag: 05.02.1992
(51) Int. Cl.: B01D 21/24

(54) **Verfahren zum Räumen von Schwimmschlamm aus Absetz- und Eindickbecken**
Process for removing floating sludge from sedimentation and thickening basins
Procédé pour l'évacuation des boues flotantes provenant de bassins de sedimentation et d'épaississement

(30) Priorität: 09.09.1991 DE 4129748; 28.02.1991 DE 4106291
(43) Veröffentlichungstag der Anmeldung: 07.10.1992
(73) Patentinhaber: PASSAVANT-WERKE AG, 65322 Aarbergen 7 (DE)
(72) Erfinder: Kettenbach, Karl, Ing.(grad.), W-6209 Aarbergen 2 (DE); Weber, Wilhelm, W-6252 Diez (DE); Schmidt, Peter, W-6209 Hohemstein (DE); Walz, Günter, W-6250 Limburg/Lahn (DE)

(56) Entgegenhaltungen:
- DE-A- 1 584 976
- DE-A- 3 443 309
- US-A- 3 890 289

## Beschreibung

Die Erfindung bezieht sich auf ein Verfahren zum Räumen von Schwimmschlamm jeder Art aus Absetz- oder Eindickbecken.

Es ist bekannt (DE-PS 1 584 976), den Schwimmschlamm zwischen einer Schwimmschlamm-Abzugsrinne und einem relativ zu ihr bewegten Schwimmschlamm-Räumschild zusammenzuschieben und dann durch Absenken der Einlaufkante der Abzugsrinne abzuziehen. Das Absenken der Einlaufkante vor dem konzentrierten Schwimmschlamm erzeugt einen Räumdruck, der für den vollständigen Abzug des Schwimmschlamms sorgt.

Es hat sich gezeigt, daß dieses bei Rechteckbecken angewendete Räumverfahren mit am Beckenende feststehender Abzugsrinne noch nicht optimal ist. Der lange Räumweg bewirkt, daß sich Schwimmschlamm unter dem Räumschild hindurch der Räumung entzieht.

Bei Rund- oder Ringbecken ist es bekannt, eine kontinuierlich verfahrbare laufende Abzugsrinne zu benutzen, deren intervallartig abgesenkte Einlaufkante aber keinen geregelten Abzug des Schwimmschlamms bewirkt. Der Schlamm wandert vielmehr vor der Rinne her und entzieht sich somit dem Abzug größtenteils.

Bei der Lösung der sich aus diesen Nachteilen ergebenden Aufgabe wird von einer Abzugsrinne ausgegangen, deren Einlaufkante bei relativer Annäherung des Räumschilds absenkbar ist.

Der Wasserspiegel in den Absetzbecken ist erheblichen Schwankungen unterworfen. Es bedarf demnach einer Anpassung des Wegs, den die Einlaufkante der in der Höhe feststehenden Abzugsrinne zum vollständigen Abzug des Schwimmschlamms nach unten verstellt werden muß. Bei der bekannten Räumvorrichtung wird die als Schwenkklappe ausgebildete Einlaufkante der Abzugsrinne von einem an der Räumerbrücke oder dem Räumschild befestigten Absenkantrieb um einen voreingestellten Weg nach unten gedrückt. Im Betrieb dieser Räumvorrichtung hat sich gezeigt, daß bei wechselndem Wasserspiegel entweder zu wenig Schwimmschlamm oder zuviel Wasser mit abgezogen wird. Die Aufgabe, diesen und den vorerwähnten Mangel zu beseitigen, wird bei Rund- oder Ringbecken mit verfahrbarer Abzugsrinne dadurch gelöst, daß das Räumschild zwecks abschnittsweisem Räumen der Beckenoberfläche wiederholt ausgehoben, in eine von der Abzugsrinne entfernte Stellung vorbewegt, dort angehalten und abgesenkt wird, während die Abzugsrinne dem Räumschild unter Zusammenschieben des Schwimmschlamms nachfährt, und daß der Absenkantrieb für die Einlaufkante der Abzugsrinne vor dem den Abzug des Schwimmschlamms bewirkenden Absenken bei Annäherung an das stillstehende Räumschild auf eine den Spiegel im Becken berücksichtigende Stellung vorabgesenkt wird, von der aus der voreingestellte Absenkweg für die Einlaufkante anschließend durchfahren wird. Vorzugsweise wird die Vorabsenkung erst dann vorgenommen, wenn das Räumschild in die Nähe der Abzugsrinne gelangt ist. Dadurch ist unter allen Betriebsumständen sichergestellt, daß die Einlaufkante um den richtigen Betrag und zum richtigen Zeitpunkt abgesenkt wird. Voraussetzung für diese richtige Bewegung ist, daß die Vorabsenkung von einer oberen Stellung der Einlaufkante aus erfolgt, die auf jeden Fall über dem höchsten vorkommenden Wasser/Schlamm-Spiegel liegt. Vorzugsweise sind Vorab- und Absenkbewegung schon vor dem Ende des Zusammenschiebens des Schwimmschlamms abgeschlossen, so daß noch eine Restbewegung für das Einschieben des Schwimmschlamms mit dem Räumschild bleibt. Die Fahrbewegung der Abzugsrinne wird während des Abzugs nicht unterbrochen. Die das Räumschild aufnehmende eigene Brücke hat vorzugsweise einen Freilauf, so daß es von der Hauptbrücke antriebslos mitgenommen wird, bis es wieder ausgehoben und vorgefahren wird.

Bei Rund- und Ringbecken, die mit stationär angeordneten Schwimmschlamm-Abzugsrinnen und einem umlaufenden Räumschild versehen sind, wird die Erfindung dadurch verwirklicht, daß das über die Abzugsrinnen hinwegbewegbare Räumschild jeweils hinter einer überfahrenen Abzugsrinne in den Schwimmschlamm abgesenkt, zur nächsten Abzugsrinne verfahren und dort nach Ausschieben des Schwimmschlamms über die abgesenkte Einlaufkante der Abzugsrinne ausgehoben wird, und daß der Absenkantrieb für die Einlaufkante vor dem den Abzug des Schwimmschlamms bewirkenden Absenken bei Annäherung des Räumschilds auf eine den Spiegel im Becken berücksichtigende Stellung vorabgesenkt wird, von der aus der voreingestellte Absenkweg für die Einlaufkante anschließend durchfahren wird. Die Aushebebewegung des Räumschilds beginnt erst nach Beendigung der Ausschiebebewegung des Schwimmschlamms.

Die Abtasteinrichtung für den Wasser/Schlamm-Spiegel ist vorzugsweise als Druckmeßdose ausgebildet, die zusammen mit der Absenkeinrichtung für die Einlaufkante von oben in die Schwimmschlammschicht bewegt wird. Bei Erreichen des voreingestellten Drucks in der Druckmeßdose wird der Absenkantrieb auf den voreingestellten Absenkweg für die Einlaufkante umgeschaltet. In dem bevorzugten Fall, wo der Absenkantrieb eine Leitkulisse enthält, mit der die als Schwenkklappe ausgebildete Einlaufkante niedergedrückt wird, ist diese Leitkulisse vorne mit einer schrägen Auflauffläche mit ausreichender Länge versehen. Die Leitkulisse wird demnach zuerst in die vom Wasserspiegel bestimmte und von der Druckmeßdose abgetastete Vorabsenkstellung bewegt. Die Auslaufschräge sorgt dann für die richtige Öffnungshilfe der Einlaufkante.

Auf dem übrigen Weg zwischen der Räumvorgängen befindet sich der Absenk-Antrieb für die Einlaufkante in einer durch einen Endschalter festgelegten oberen Ruhestellung, die auf jeden Fall so hoch gelegt ist, daß er die in der höchstmöglichen Stellung befindliche Einlaufkante von oben erfassen kann.

Es ist eine konstruktive Vereinfachung, wenn erfindungsgemäß das Räumschild mit dem Absenkantrieb und der Leitkulisse und der Druckmeßdose vereinigt wird. Der Hubantrieb für das Räumschild erübrigt sich dann, und die Druckmeßdose kann sogar dafür benutzt werden, um auch das Räumschild auf die richtige Eintauchtiefe einzustellen.

Zwei bevorzugte Ausführungsformen des erfindungsgemäßen Verfahrens werden nachfolgend anhand der Abbildungen beschrieben. Es zeigen im einzelnen:
- Fig. 1: eine Brücke mit Räumer für eine feststehende Schwimmschlamm-Abzugsrinne in Anfahrstellung,
- Fig. 2: die Vorrichtung nach Fig. 2 mit vorabgesenktem Absenk-Antrieb,
- Fig. 3: dieselbe Vorrichtung während des Schlammabzugs,
- Fig. 4: dieselbe Vorrichtung nach Überfahren der Abzugsrinne,
- Fig. 5: eine zweite Ausführung mit zwei Räumerbrücken für Abzugsrinne und Räumschild in der Annäherungsstellung,
- Fig. 6: die Vorrichtung nach Fig. 5 mit vorabgesenktem Absenk-Antrieb,
- Fig. 7: dieselbe Vorrichtung während des Schwimmschlamm-Abzugs,
- Fig. 8: dieselbe Vorrichtung am Ende des Schwimmschlamm-Abzugs.

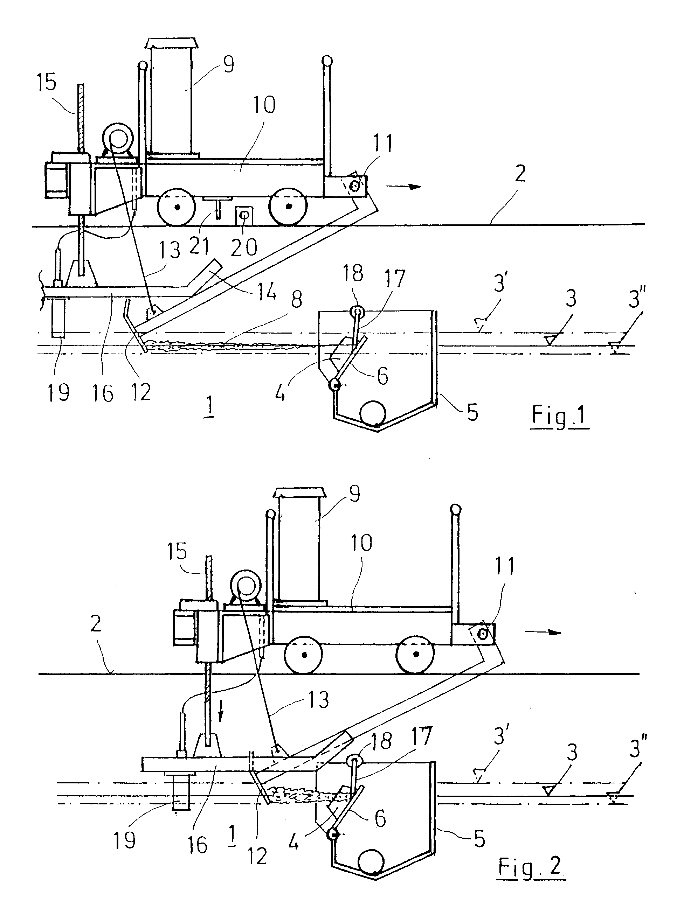

Von dem in Fig. 1 gezeigten Absetzbecken 1 in Längs- oder Kreis(ring)form sind nur die Beckenkrone 2, der Wasserspiegel 3, und die Schwimmschlamm-Abzugsrinne 5 zu sehen. Die Einlaufkante der Abzugsrinne 5 ist als Schwenkklappe 6 ausgebildet, die durch einen Schwimmer 4 in der obersten Schließlage gehalten wird. Dabei ist die Schwenkklappe und der Schwimmer so ausgebildet, daß die Schwenkklappe auch bei höchstmöglichem Spiegel 3' und tiefstmöglichem Spiegel 3'' einwandfrei schließt. Die Schwimmschlamm-Abzugsrinne 5 ist an eine außenliegende Sammelrinne (nicht dargestellt) angeschlossen, in die der Schlamm abfließt. Von der Schwenkklappe 6 ragt ein Finger 17 mit einer Druckrolle 18 nach oben. Als Räumelement dient das an der Räumerbrücke 10 im Punkt 11 angelenkte Räumschild 12, das mittels des Zugseils 13 gehoben und gesenkt werden kann. Des weiteren ist an der Räumerbrücke 10 eine Betätigungsvorrichtung für die Schwenkklappe 6 angebracht, die aus einer angetriebenen Schraubspindel 15 und einer horizontal verlaufenden Leitkulisse 16 mit vorderer Auflaufschräge 14 besteht. Mit der Leitkulisse ist noch eine Druckmeßdose 19 verbunden, mit der der Schlamm-Wasser-Spiegel 3 abgetastet werden kann. Die Meßsignale werden im Schaltschrank 9 verarbeitet und an die beiden Antriebe weitergegeben.

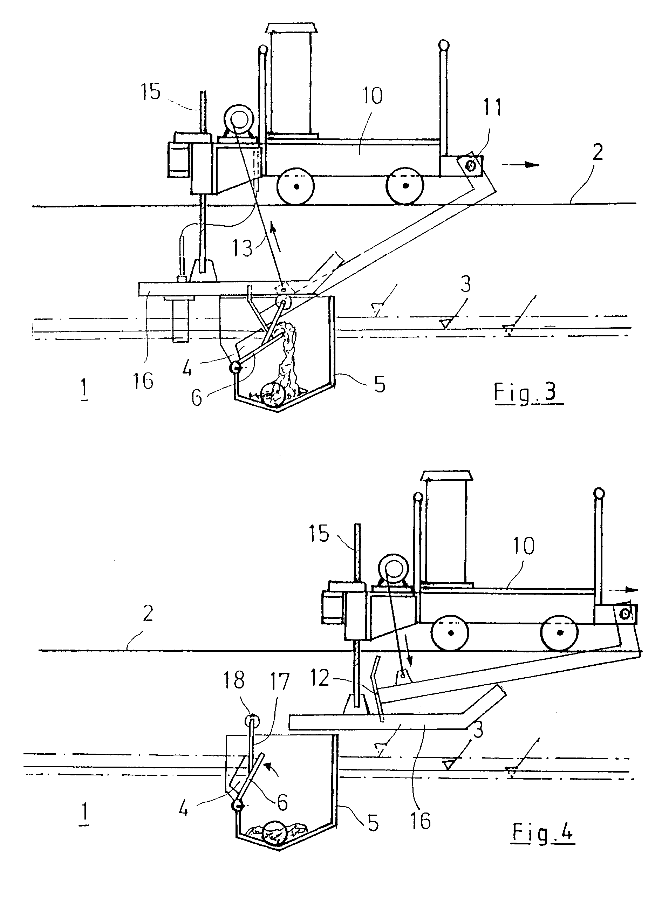

Das Programm für den Schwimmschlammabzug wird durch einen Näherungsschalter 20 mit Schaltfahne 21 ausgelöst, und zwar zu einem Zeitpunkt, wo der Schwimmschlamm 8 ausreichend zusammengeschoben und die Leitkulisse 16 sich der Druckrolle 18 genähert hat (Fig. 1). Jetzt wird die Druckmeßdose zusammen mit der Leitkulisse nach unten gefahren und der Druck gemessen (Fig. 2). Sobald der voreingestellte Druck erreicht ist, beginnt das Absenken der Leitkulisse 16 um den voreingestellten Weg bis in die in Fig. 2 gezeigte unterste Stellung. Die Brücke fährt in die in Fig. 3 dargestellte Stellung weiter; dabei wird die Schwenkklappe von der Leitkulisse so weit nach unten gedrückt, daß der Schwimmschlamm praktisch vollständig in die Abzugsrinne 5 geräumt wird (Fig.3). Vor Auflaufen des Räumschilds 12 an der Rückseite der Abzugsrinne wird das Räumschild durch das Seil 13 so weit hochgezogen, daß es die Rinnen oben überfahren kann (Fig.4). Gleichzeitig verläßt die Leitkulisse 16 die Druckrolle 18, so daß die Schwenkklappe 6 in die Schließstellung nach oben schwenkt. Anschließend wird auch die Leitkulisse 16 mit der Druckmeßdose 19 wieder in die obere Ruhestellung angehoben (nicht dargestellt).

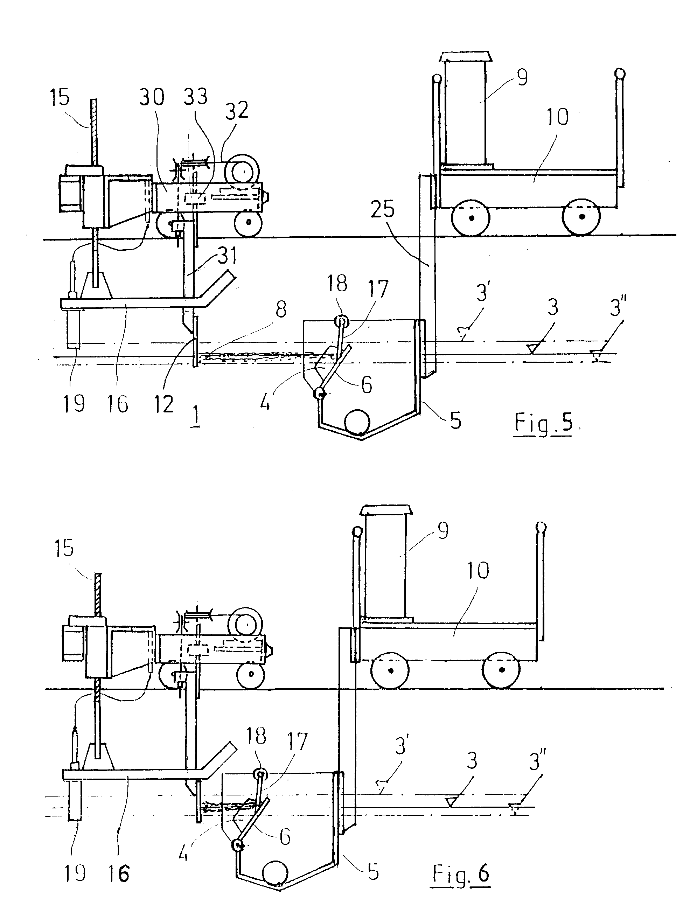

Die Erfindung ist in abgewandelter Form auch für Räumerbrücken geeignet, bei denen die Abzugsrinne an der Brücke befestigt ist (Fig. 5 bis 8).

Gleiche Teile der Figuren 1 bis 4 sind mit denselben Bezugsziffern gekennzeichnet.

An der Brücke 10 ist die Abzugsrinne 5 mittels Streben 25 so befestigt, daß die durch Schwimmer 4 hochgehaltene Schwenkklappe 6 Abwasser- und Schlammzufluß verhindert. Zusätzlich zu dieser Hauptbrücke ist eine Vorläuferbrücke 30 vorgesehen, die auf dem Drehzapfen der Hauptbrücke gelagert ist und einen eigenen Antrieb (nicht dargestellt) aufweist. Die Vorläuferbrücke 30 besitzt an der in Fahrtrichtung der Hauptbrücke vorne liegenden Seite wieder die Leitkulisse 16 mit dem Absenk-Antrieb 15 und der Druckmeßdose 19. Das Räumschild 12 ist hier an Winkelprofilen 31 befestigt, die mittels Seilzüge 32 synchron höhenverstellbar und in Gleitführungen 33 geführt sind.

Der Räumvorgang läuft folgendermaßen ab:
Die Vorläuferbrücke 30 ist in die in Fig. 5 gezeigte Stellung vorgefahren und ist dort angehalten worden. Das Räumschild 12 ist abgesenkt worden, so daß der Schwimmschlamm zwischen der Einlaufkante 6 der Abzugsrinne 5 und dem Räumschild von der weiterfahrenden Hauptbrücke zusammengeschoben wird. Bei Annäherung der Hauptbrücke wird zunächst der Absenk-Antrieb 15 ausgelöst und die Druckmeßdose 19 bis zu dem voreingestellten Druckwert in den Wasserspiegel eingetaucht. Danach wird noch der voreingestellte Weg für die Öffnung der Einlaufkante durchfahren (Fig. 6).

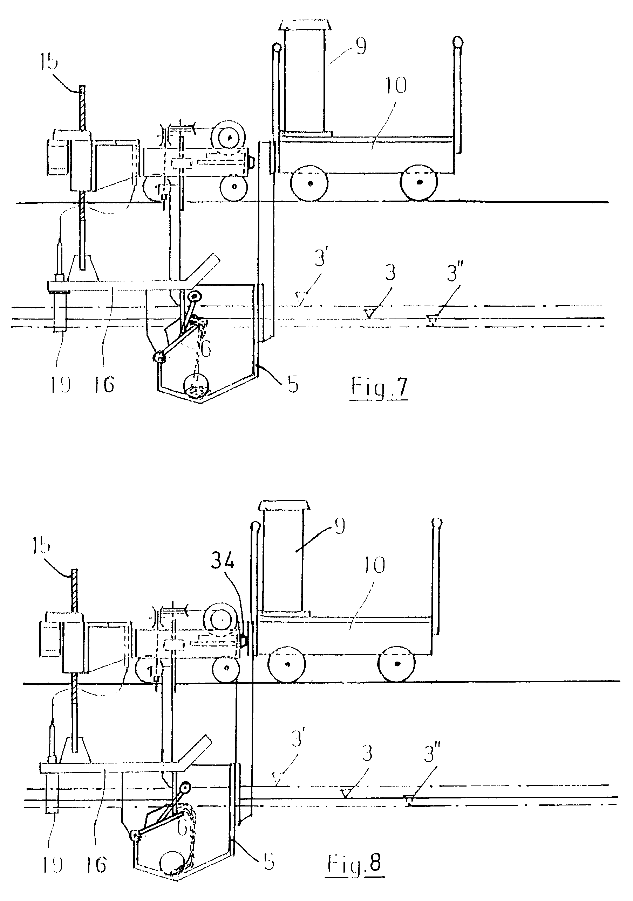

In der Stellung nach Fig. 7 nur die Leitkulisse 16 die Schwenkklappe 6 bereits so weit niedergedrückt, daß ein Teil des Schwimmschlamms bereits in die Abzugsrinne gelangt ist. Anschließend (Fig. 8) wird auch die Unterkante des Räumschilds noch wirksam und drückt die Schwenkklappe weiter auf, so daß auch der Rest des Schwimmschlamms abgeschoben wird. In dieser Stellung ist der Räumvorgang beendet. Die Vorläuferbrücke wird mittels Puffer 34 von der Hauptbrücke im Freilauf mitgenommen, bis der Antrieb der Vorläuferbrücke den Impuls zum schnellen Vorfahren und das Räumschild den Impuls zum Ausheben erhält. Die Steuerung des Absenk-Antriebs und des Räumschilds erfolgt von der Hauptbrücke aus.

## Patentansprüche

1. Verfahren zum Räumen von Schwimmschlamm (8) aus Absetz- oder Eindickbecken(1), bei dem der Schwimmschlamm (8) zwischen einem bewegten Räumschild (12) und einer verfahrbaren Schwimmschlamm-Abzugsrinne (5) zusammengeschoben wird und bei dem die Einlaufkante (6) der Abzugsrinne (5) durch einen Absenkantrieb (15, 16) absenkbar ist, **dadurch gekennzeichnet**, daß das Räumschild (12) zwecks abschnittsweisem Räumen der Beckenoberfläche wiederholt ausgehoben, in eine von der Abzugsrinne (5) entfernte Stellung vorbewegt, dort angehalten und abgesenkt wird, während die Abzugsrinne ( 5) dem Räumschild (12) unter Zusammenschieben des Schwimmschlamms (8) nachfährt, und daß der Absenkantrieb (15, 16) für die Einlaufkante (6) der Abzugsrinne (5) vor dem den Abzug des Schwimmschlamms (8) bewirkenden Absenken bei Annäherung an das stillstehende Räumschild (12) auf eine den Spiegel (3) im Becken (1) berücksichtigende Stellung vorabgesenkt wird, von der aus der voreingestellte Absenkweg für die Einlaufkante (6) anschließend durchfahren wird.

2. Verfahren zum Räumen von Schwimmschlamm (8) aus Absetz- oder Eindickbecken (1), bei dem der Schwimmschlamm (8) von einem bewegten Räumschild (12) zu einer feststehenden Schwimmschlamm-Abzugsrinne (5) hin zusammengeschoben wird und bei dem die Einlaufkante (6) der Abzugsrinne (5) durch einen Absenkantrieb (15, 16) absenkbar ist, **dadurch gekennzeichnet**, daß das über die Abzugsrinnen (5) hinwegbewegbare Räumschild (12) jeweils hinter einer überfahrenen Abzugsrinne (5) in den Schwimmschlamm (8) abgesenkt, zur nächsten Abzugsrinne (5) verfahren und dort nach Ausschieben des Schwimmschlamms (8) über die abgesenkte Einlaufkante (6) der Abzugsrinne (5) ausgehoben wird, und daß der Absenkantrieb (15, 16) für die Einlaufkante (6) vor dem den Abzug des Schwimmschlamms (8) bewirkenden Absenken bei Annäherung des Räumschilds (12) an die Einlaufkante (6) auf eine den Spiegel (3) im Becken (1) berücksichtigende Stellung vorabgesenkt wird, von der aus der voreingestellte Absenkweg für die Einlaufkante (6) anschließend durchfahren wird.

3. Verfahren nach Anspruch 1, **dadurch gekennzeichnet**, daß die Fahrbewegung der Abzugsrinne (5) während des Abzugs des Schwimmschlamms (8) nicht unterbrochen und das Räumschild (12) mit derselben Geschwindigkeit im Freilauf mitgenommen wird, bevor es ausgehoben und vorgefahren wird.

4. Verfahren nach Anspruch 3, **dadurch gekennzeichnet**, daß für das Räumschild (12) eine eigene Brücke (30) mit eigenem Antrieb vorgesehen ist.

5. Verfahren nach einem oder mehreren der Ansprüche 1 bis 4, **dadurch gekennzeichnet**, daß das Vorabsenken des Absenkantriebs (15, 16) aus einer Hochstellung heraus erfolgt, die über dem höchstmöglich vorkommenden Schlamm- und Wasserspiegel (3') liegt.

6. Verfahren nach einem oder mehreren der vorstehenden Ansprüche, **dadurch gekennzeichnet**, daß die Einlaufkante (6) durch Schwimmer (4) in der vom Schlamm- oder Wasserspiegel (3) bestimmten Schließstellung gehalten wird.

7. Verfahren nach einem oder mehreren der vorstehenden Ansprüche, **dadurch gekennzeichnet**, daß der Absenkantrieb für die Einlaufkante (6) als eine eine Auflaufschräge (14) aufweisende höhenverstellbare Leitkulisse (16) ausgebildet ist, der an der als Schwenkklappe ausgebildeten Einlaufkante (6) eine an einem Kipparm (17) gelagerte Gleitrolle (18) gegenüberliegt.

8. Verfahren nach Anspruch 7, **dadurch gekennzeichnet**, daß der Schlamm- oder Wasserspiegel (3) von einer von der Leitkulisse (16) nach unten vorstehenden Druckmeßdose (19) abgetastet wird.

9. Verfahren nach einem oder mehreren der vorstehenden Ansprüche, **dadurch gekennzeichnet**, daß der Absenkantrieb (15, 16) von einem berührungslos arbeitenden Näherungsschalter (20, 21) aktiviert und bei Erreichen der von der Druckmeßdose (19) abgetasteten Vorabsenkstellung auf den voreingestellten Abzugsweg für die Einlaufkante (6) umgeschaltet wird.

10. Verfahren nach einem der Ansprüche 7 bis 9, **dadurch gekennzeichnet**, daß die Schwenkklappe (6) nach Überfahren oder Anheben der Leitkulisse (16) selbsttätig, z.B. durch ein Gegengewicht, in die Schließstellung zurückgeführt wird.

11. Verfahren nach Anspruch 9, **dadurch gekennzeichnet**, daß die Leitkulisse (16) nach Überfahren der Einlaufkante (6) nur in die Ausgangsstellung des voreingestellten Abzugsweges angehoben und erst bei Annäherung an den Auslöseschalter (20, 21) für die Vorabsenkbewegung in die Hochstellung gehoben wird.

12. Verfahren nach Anspruch 2 und einem oder mehreren der Ansprüche 3 bis 11, **dadurch gekennzeichnet**, daß das Räumschild (12) einen von Positionsschaltern aktivierten Antrieb (13) zum Ausheben und Absenken während des Überfahrens der Abzugsrinne (5) aufweist.

13. Verfahren nach einem oder mehreren der vorstehenden Ansprüche, **dadurch gekennzeichnet**, daß das Räumschild (12) mit dem Absenkantrieb (15, 16) integriert ist.

14. Verfahren nach Anspruch 13, **dadurch gekennzeichnet**, daß der Absenkantrieb (15, 16) mit dem Räumschild (12) nach Überfahren der Abzugsrinne (5) im ausgehobenen Zustand mit Hilfe der Druckmeßdose (19) sofort auf eine den Wasserspiegel (3) berücksichtigende Räumstellung abgesenkt wird, die mit der Vorabsenkstellung identisch ist.

15. Verfahren nach Anspruch 13, **dadurch gekennzeichnet**, daß der Absenkantrieb (15, 16) mit dem Räumschild (12) nach Überfahren der Abzugsrinne (5 )im ausgehobenen Zustand sofort ohne Aktivierung der Druckmeßdose (19) auf eine tiefstmögliche Räumstellung abgesenkt wird und daß er bei Annäherung an die nächste Abzugsrinne (5) durch Aktivierung der Druckmeßdose (19) auf die den Wasserspiegel (3) berücksichtigende Ausgangsstellung angehoben wird.

## Claims

1. Procedure for scum (8) removal from sedimentation or thickener tanks (1) where the scum is pushed by a movable scum blade (12) towards a traveling scum discharge trough (5) provided with an overflow edge (6) which can be lowered by a lowering mechanism (15, 16), **characterized in that** the scum blade (12), for sectional cleaning of the water surface, is lifted from the water and moved to a position away from the discharge trough (5) where it is lowered again while the discharge trough (5) follows the scum blade (12) pushing the scum (8) on its way and in that the lowering mechanism (15, 16) for the overflow edge (6) of the discharge trough (5) first lowers the overflow edge (6), when approaching the stationary scum blade (12), to a position considering the water level (3) in the tank (1) and, only then, starts with the pre-adjusted lowering course of the overflow edge (8) which is required to initiate scum (8) removal.

2. Procedure for scum (8) removal from sedimentation or thickener tanks (1) where the scum is pushed by a movable scum blade (12) towards a stationary scum discharge trough (5) provided with an overflow edge (6) which can be lowered by a lowering mechanism (15, 16), **characterized in that** the scum blade (12) which can be moved across the discharge troughs (5) is lowered behind each discharge trough (5) into the scum, then moved to the next discharge trough (5) and there, after having pushed the scum over the lowered overflow edge (6) of the discharge trough (5), is lifted up, and in that the lowering mechanism (15, 16) for the overflow edge (6) of the discharge trough (5) first lowers the overflow edge (6), when the scum blade (12) is approaching, to a position considering the water level (3) in the tank (1) and, only then, starts with the pre-adjusted lowering course of the overflow edge (8) which is required to initate scum (8) removal.

3. Procedure according to claim 1, **characterized in that** the discharge trough (5) continues to move while the scum (8) is discharged and the scum blade (12) is running free along at the same speed until it is lifted above the water and moved to an advanced position.

4. Procedure according to claim 3, **characterized in that** the scum blade (12) is provided with its own bridge (30) and own drive unit.

5. Procedure according to one or several claims of claim 1 to 4, **characterized in that** the preliminary lowering of the lowering mechanism (15, 16) is done from an elevated position which is located above the highest possible scum and water level (3').

6. Procedure according to one or several of aforementioned claims, **characterized in that** the overflow edge (6) is maintained by floats (4) in a closed position which is determined by the scum or water level (3).

7. Procedure according to one or several of aforementioned claims, **characterized in that** the lowering mechanism for the overflow edge (6) is formed as a height adjustable guide board provided with an inclined end pointing upward (14). The overflow edge (6) which is formed as a swinging plate, is facing a guide-pulley (18) positioned on a rocker arm (17).

8. Procedure according to claim 7, **characterized in that** the scum or water level (3) is scanned by a pressure cell protruding downward from the guide board.

9. Procedure according to one or several of aforementioned claims, **characterized in that** the lowering mechanism (15, 16) is activated by a non-contact proximity switch (20, 21) and, when reaching the preliminary lowering position which was scanned by the pressure cell (19), is switched over to the preadjusted lowering course for the overflow edge (6).

10. Procedure according to one of the claims 1 through 9, **characterized in that** the swinging plate (6), after crossing or lifting the guide board (16), automatically returns into its closed position, e.g. by means of a counterweight.

11. Procedure according to claim 9, **characterized in that** the guide board (16), after crossing the overflow edge (6), is only lifted to the initial position of the preadjusted lowering course and only when approaching the proximity switch (20, 21) is lifted to the elevated position from where the preliminary lowering movement starts.

12. Procedure according to claim 2 and one or several aforementioned claims 3 through 11, **characterized in that** the scum blade (12) is equipped with a drive unit (13) for lifting and lowering while crossing the discharge trough (5), which is activated by non-contact proximity switches.

13. Procedure according to one or several aforementioned claims, **characterized in that** the scum blade (12) is an integral part of the lowering mechanism (15, 16).

14. Procedure according to claim 13, **characterized in that** the lowering mechanism (15, 16) and the scum blade (12) are lowered immediately by the pressure cell, once the discharge trough (5) has been crossed in a lifted position, to a scraping position considering the water level (3), and which is identical to the preliminary lowering position.

15. Procedure according to claim 13, **characterized in that** the lowering mechanism (15, 16) and the scum blade (12) are lowered immediately without activating the pressure cell (19) to the lowest possible scraping position, once the discharge trough (5) has been crossed in a lifted position, and that they are raised by activating the pressure cell (19) to the initial position considering the water level (3) when approaching the next discharge trough (5).

## Revendications

1. Procédé destiné à l'élimination de l'écume (8) dans un bassin de décantation ou épaissiseur (1) où l'écume (8) est poussée par un racleur des flottants (12) mobile vers une goulotte de receuil de flottants (5) mobile dont le bord-déversoir (6) peut être abaissé par l'intermédiaire d'un dispositif de descente (15, 16), **caractérisé en ce que** le racleur des flottants (12) est relevé plusieurs fois de l'eau afin de nettoyer la surface d'eau en sections, et avancé à une position éloignée de la goulotte de receuil de flottants (5) où il est arrêté et abaissé tandis que la goulotte de receuil de flottants (5) suit le racleur des flottants (12) en poussant l'écume (8), et que le dispositif de descente (15, 16) pour le bord-déversoir (6) de la goulotte de recueil de flottants (5) est préabaissé, avant de s'approcher au racleur de flottants (12) arrêté, à une position tenant compte du niveau d'eau (3) dans le bassin (1) d'où, par la suite, commence la course de descente préajustée pour le bord-déversoir (6), ce qui est nécessaire pour déclencher la décharge de l'écume.

2. Procédé destiné à l'élimination de l'écume (8) dans un bassin de décantation ou épaissiseur (1) où l'écume (8) est poussée par un racleur des flottants (12) mobile vers une goulotte de receuil de flottants (5) stationnaire dont le bord-déversoir (6) peut être abaissé par l'intermédiaire d'un dispositif de descente (15, 16), **caractérisé en ce que** le racleur des flottants (12), pouvant être déplacé par-dessus les goulottes de receuil de flottants (5), est abaissé dans l'écume (8) après chaque goulotte traversée, puis déplacé vers la prochaine goulotte (5) et, après avoir poussé l'écume (8) par-dessus le bord-déversoir baissé de la goulotte (5), est relevé de l'eau, et que le dispositif de descente (15, 16) d'abord fait descendre le bord-déversoir (6), avant que le racleur des flottants (12) s'approche, à une position tenant compte du niveau d'eau (3) dans le bassin (1) d'où, par la suite, commence la course de descente préajustée pour le bord-déversoir (6) ce qui est nécessaire pour déclencher la décharge de l'écume.

3. Procédé selon revendication 1, **caractérisé en ce que** la goulotte de receuil de flottants (5) continue à se déplacer lors de la décharge de l'écume (8) et que le racleur des flottants (12) est entraîné à la même vitesse à roue libre jusqu'il est relevé et avancé à une autre position.

4. Procédé selon revendication 3, **caractérisé en ce que** le racleur de flottants (12) est pourvu d'un propre pont (30) et propre unité d'entraînement.

5. Procédé selon une ou plusieurs revendications 1 à 4, **caractérisé en ce que** le préabaissement du dispositif de descente (15, 16) se fait hors d'une position élevée, située en-dessus du niveau d'écume ou d'eau (3') qui peut se produire possiblement.

6. Procédé selon une ou plusieurs revendications mentionnées ci-avant **caractérisé en ce que** le bord-déversoir (6) est maintenu dans sa position fermée laquelle est déterminée par le niveau d'écume ou d'eau (3), par l'intermédiaire de flotteurs (4).

7. Procédé selon une ou plusieurs revendications mentionnées ci-avant **caractérisé en ce que** le dispositif de descente pour le bord-déversoir (6) en forme de glissière de guidage (16) est ajustable en hauteur et munie d'une extrémité inclinée (14) vers le haut. Le bord-déversoir (6) formé comme trappe pivotante se trouve en face d'une poule de guidage fixée à un bras basculant (17).

8. Procédé selon revendication 7, **caractérisé en ce que** le niveau d'écume ou d'eau (3) est exploré par une boîte dynamométrique (19) saillant de la glissière de guidage (16) vers le bas.

9. Procédé selon une our plusieurs revendications mentionnées ci-avant, **caractérisé en ce que** le dispositif de descente (15, 16) est activé par l'intermédiaire d'un détecteur de proximité (20, 21) et après étant arrivé à la position de préabaissement exploré par la boîte dynamométrique, est commuté à la course de descente préajustée pour le bord-déversoir (6).

10. Procédé selon une des revendications 7 à 9, **caractérisé en ce que** la trappe pivotante (6), ou après la glissière de guidage (16) fut traversée ou relevée, retourne automatiquement dans sa position fermée, p.ex. au moyen d'un contre-poids.

11. Procédé selon revendication 9, **caractérisé en ce que** la glissière de guidage (16), après avoir traversé le bord-déversoir (6), n'est relevée que dans la position initiale de la course de descente préajustée et, seulement, en s'approchant au détecteur de proximité (20, 21) est relevée dans la position élevée pour le préabaissement.

12. Procédé selon revendication 2 et une ou plusieurs des revendications 3 à 11, **caractérisé en ce que** le racleur des flottants (12) est équipé d'une unité d'entraînement (13) pour le relèvement et abaissement lors de la traversée de la goulotte de receuil de flottants (5) qui est activée par les détecteurs de proximité.

13. Procédé selon une ou plusieurs revendications mentionnées ci-avant, **caractérisé en ce que** le racleur des flottants (12) est partie intégrale du dispositif de descente (15, 16).

14. Procédé selon revendication 13, **caractérisé en ce que** le dispositif de descente (15, 16) et le racleur des flottants (12) sont abaissés immédiatement par l'intermédiaire de la boîte dynamométrique (19), après avoir traversé en position relevée la goulotte de receuil de flottants (5), à une position de raclage tenant compte du niveau d'eau (3) laquelle est identique à la position de préabaissement.

15. Procédé selon revendication 13, **caractérisé en ce que** le dispositif de descente (15, 16) et le racleur des flottants (12) sont abaissés immédiatement à une position de raclage plus bas possible, sans activer la boîte dynamométrique (19) et après avoir traversé en position relevée la goulotte de receuil de flottants (5) et qu'ils sont relevés par activation de la boîte dynamométrique (19) lorsqu'ils s'approchent à la prochaine goulotte de receuil de flottants (5), à la position initiale tenant compte du niveau d'eau (3).
